# FASCICULE DE BREVET EUROPEEN

(11) **EP 1 114 360 B1**
(45) Date de publication et mention de la délivrance du brevet: **10.12.2003**
(21) Numéro de dépôt: 99941737.1
(22) Date de dépôt: 10.09.1999
(51) Int. Cl.: G05B 19/042, H01H 9/16

(54) **APPAREIL ELECTRIQUE A COMMANDE PAR LA TENSION D'ALIMENTATION, FONCTIONNANT EN ALTERNATIF OU CONTINU**
ELEKTRISCHE VORRICHTUNG, GESTEUERT DURCH DIE VERSORGUNGSSPANNUNG, WELCHE MIT EINER WECHSEL- ODER GLEICHSPANNUNG ARBEITET
ELECTRIC APPARATUS WITH SUPPLY VOLTAGE CONTROL, OPERATING IN ALTERNATING OR DIRECT CURRENT

(30) Priorité: 15.09.1998 FR 9811500
(43) Date de publication de la demande: 11.07.2001
(73) Titulaire: Crouzet Automatismes, 26000 Valence (FR)
(72) Inventeur: MEYER, Olivier-Thomson-CSF Prop. Int. Dépt. Brevet, 94117 Arcueil Cedex (FR)
(74) Mandataire: Guérin, Michel
(86) Numéro de dépôt international: FR9902162
(87) Numéro de publication internationale: WO00016174

(56) Documents cités:
- EP-A- 0 336 051
- EP-A- 0 784 329

## Description

L'invention concerne un appareil électrique à commande électronique, alimenté en permanence en alternatif ou en continu, et dont un mode de fonctionnement peut être déclenché par l'application de la tension d'alimentation sur une entrée de contrôle de l'appareil.

Un exemple typique d'appareil concerné par l'invention est une minuterie qui est normalement alimentée en permanence, et qui ferme ou ouvre un relais pendant une durée déterminée après la fermeture d'un contact électrique de commande qui applique la tension d'alimentation (le secteur à 230 volts par exemple) sur l'entrée de contrôle de la minuterie. Ou encore une minuterie qui ferme ou ouvre un relais après qu'une durée déterminée se soit écoulée depuis la fermeture de ce contact de commande.

Mais l'invention peut s'appliquer à beaucoup d'autres appareils électriques dès lors qu'une fonctionnalité de ces appareils est déclenchée par l'application, sur une entrée de contrôle, d'une tension qui est la tension alimentant en permanence l'appareil.

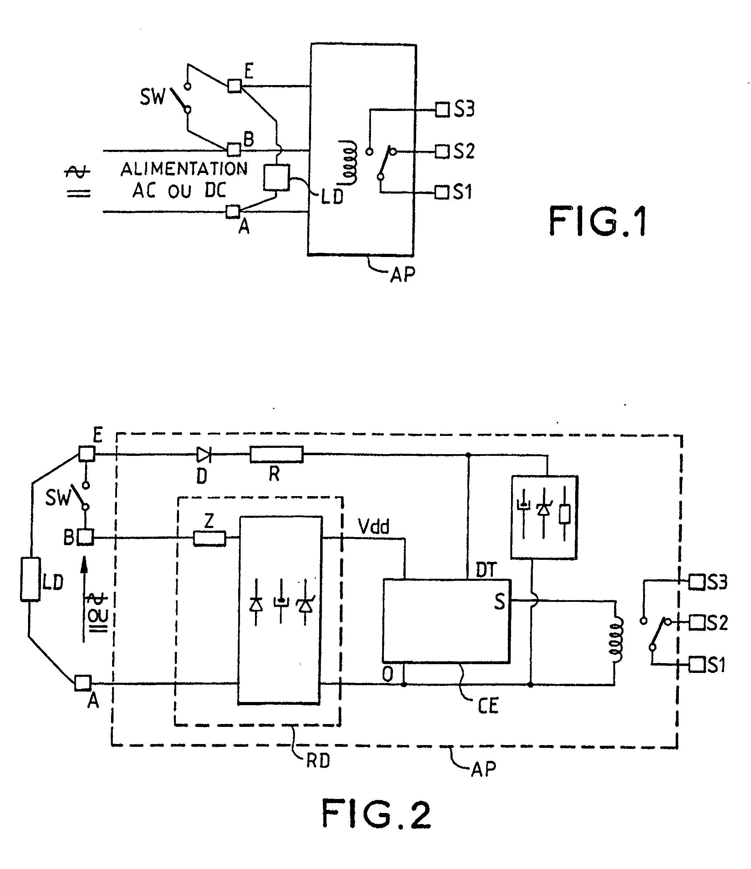

La figure 1 représente le principe général de l'appareil qu'on veut réaliser, et on considérera dans la suite qu'il s'agit d'une minuterie.

L'appareil AP comporte deux bornes d'alimentation extérieure permanente A et B destinées à recevoir une tension alternative (tension de secteur de 230 volts par exemple) ou une tension continue (par exemple 12 volts ou 24 volts).

L'appareil comporte également une entrée de contrôle E et, si la fonctionnalité de l'appareil le nécessite, des bornes de sorties, ici S1, S2, S3. Dans cet exemple, S1, S2, S3 sont les bornes de sortie d'un relais interne à l'appareil.

L'entrée de contrôle E déclenche le fonctionnement de l'appareil si elle est portée au potentiel de la borne d'alimentation B, par exemple par la fermeture d'un contact SW relié entre E et B. Ce contact SW peut être un interrupteur mécanique ou électronique. On a représenté par ailleurs sur la figure 1 une charge LD placée en parallèle entre la borne A et l'entrée de commande E, cette charge consommant donc un courant dès lors que l'entrée E cesse d'être au potentiel de A, par exemple si on porte l'entrée E au potentiel de B. Pour fixer les idées, la charge LD peut être tout simplement un voyant lumineux qui montre que la minuterie est déclenchée.

Cette charge reliée à l'entrée de contrôle E rend plus difficile la conception des circuits de commande interne de l'appareil par suite des courants de fuite qui circulent dans cette charge lorsque le contact SW est ouvert. Un but de l'invention est de proposer un circuit de commande qui fonctionne malgré la présence éventuelle de cette charge.

Un autre but de l'invention est de proposer un circuit de commande qui fonctionne pour différentes valeurs de tension d'alimentation de l'appareil, c'est-à-dire qui puisse être branché directement sur la tension d'alimentation quel que soit le niveau de celle-ci dans une large gamme de valeurs.

Dans l'art antérieur (voir exemple EP 0 784 329), on a proposé des appareils tels que celui de la figure 2, dans lequel l'appareil contient un circuit électronique interne CE assurant la fonctionnalité désirée (contrôle de la durée de minuterie et commande du relais de sortie par exemple) et fonctionnant sous basse tension continue Vdd (5 volts par exemple). Le circuit électronique interne comporte alors une entrée de détection DT et l'observation du niveau de tension sur cette entrée DT permet le déclenchement du fonctionnement souhaité de l'appareil. La tension Vdd est élaborée à partir d'un circuit de redressement, filtrage et régulation RD. L'entrée de contrôle E de l'appareil est reliée à l'entrée de détection DT par une diode de redressement D et une résistance R. Un circuit de filtrage et de régulation de niveau de tension peut être placé en parallèle entre l'entrée de détection DT et le potentiel de référence 0 de l'alimentation Vdd. Lorsque le contact extérieur SW se ferme, l'entrée de détection DT reçoit un signal détectable qui déclenche la minuterie.

Cette solution a l'inconvénient de n'être utilisable que pour des appareils fonctionnant avec une seule tension d'alimentation possible (par exemple 230 volts alternatifs) car la valeur de la résistance R doit être adaptée à chaque tension d'alimentation.

Le niveau de tension sur l'entrée de détection DT après fermeture du contact SW doit en effet être défini précisément pour que le circuit fonctionne correctement.

D'autre part, cette solution présente aussi l'inconvénient d'un couplage entre l'alimentation extérieure et l'entrée de détection DT par l'intermédiaire de la charge LD lorsque le contact SW est ouvert, et ce couplage n'est pas souhaitable

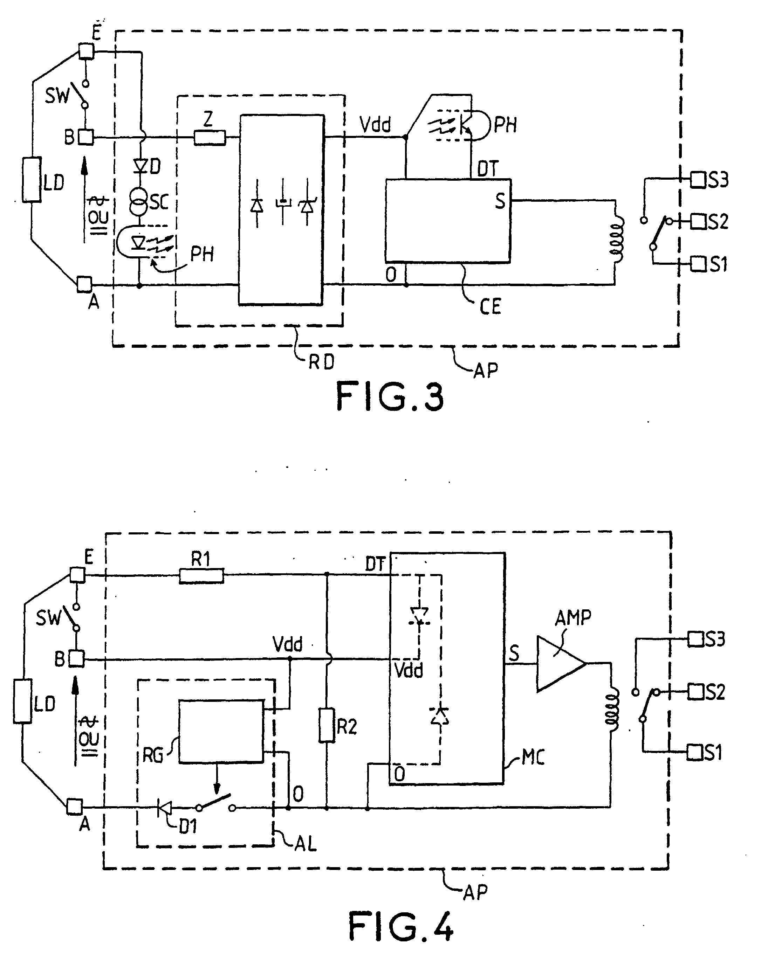

On a également proposé des appareils tels que celui de la figure 3, utilisant un photocoupleur pour isoler galvaniquement l'entrée de contrôle E et l'entrée de détection DT. L'entrée de contrôle E est reliée à un ensemble en série d'une diode de redressement D, un limiteur de courant SC et l'entrée d'un photocoupleur PH. Cet ensemble en série est relié par ailleurs à la borne d'alimentation A et le photocoupleur est activé lorsque l'entrée de contrôle E est mise au potentiel de la borne B par le contact SW. La sortie du photocoupleur PH est reliée en série entre d'une part la tension d'alimentation Vdd du circuit électronique interne CE et d'autre part l'entrée de détection DT. Le circuit de redressement filtrage et régulation RD, qui produit la tension Vdd, est identique à celui de la figure 2. Un circuit de filtrage peut également être placé en parallèle entre l'entrée de détection DT et le potentiel de référence à 0 volt.

Ce circuit de la figure 3 peut fonctionner avec une tension d'alimentation ayant plusieurs niveaux possibles (si du moins le circuit de redressement, filtrage et régulation RD le permet). Mais il est cher à cause du photocoupleur et de son limiteur de courant.

La présente invention propose une construction différente, n'utilisant pas de photocoupleur, reposant sur l'utilisation d'un redressement monoalternance pour produire la basse tension continue Vdd, d'un pont diviseur résistif pour appliquer cette basse tension à l'entrée la détection DT, et un traitement numérique permettant de déduire de la forme du signal présent sur l'entrée de détection DT la position du contact SW, même dans le cas où une charge extérieure LD est connectée à ce contact.

Selon l'invention, d'une part la basse tension Vdd produite pour alimenter les circuits électroniques internes est établie sur un conducteur relié à l'une des bornes extérieures d'alimentation (celle qui est reliée par ailleurs au contact SW) ; d'autre part le pont diviseur résistif, dont le point intermédiaire est relié à l'entrée de détection DT, est placé en série entre l'entrée de contrôle de l'appareil et le potentiel de référence à zéro volt de l'alimentation à basse tension continue Vdd. Ainsi, lors de la fermeture du contact SW, le potentiel Vdd est réinjecté sur l'entrée de détection DT par l'intermédiaire du pont diviseur. inversement, lorsque le contact SW est ouvert, le pont diviseur résistif n'est plus alimenté mais reste relié au potentiel de référence à 0 voit pour maintenir l'entrée de détection DT à zéro.

En résumé, la présente invention propose un appareil électrique ayant deux bornes d'alimentation extérieure et comportant un circuit électrique accomplissant une fonction déterminée sous la commande de fermeture ou d'ouverture d'un contact électrique pouvant être relié entre une première des bornes d'alimentation extérieure et une entrée de contrôle, l'appareil comportant encore :
- un circuit électronique de décision alimenté par deux conducteurs dont l'un est à un potentiel de référence et l'autre est à une basse tension continue Vdd, le circuit de décision ayant une entrée de détection de signal et une sortie pouvant prendre deux états selon la nature du signal présent sur l'entrée de détection, cette sortie commandant ladite fonction déterminée du circuit électrique,
- un circuit d'alimentation basse-tension continue lui-même alimenté par les deux bornes d'alimentation extérieure, ce circuit effectuant un redressement monoalternance et ayant pour sorties les conducteurs au potentiel de référence et à la tension Vdd,
   l'appareil étant caractérisé en ce que :
   a) le conducteur à la tension Vdd est relié à une borne d'alimentation extérieure,
   b) l'entrée de contrôle de l'appareil est reliée par une première résistance R1 à l'entrée de détection du circuit de décision,
   c) l'entrée de détection est reliée par une deuxième résistance R2 au conducteur au potentiel de référence,
   d) le circuit de décision comporte des moyens électroniques pour,
- d'une part détecter la présence, sur l'entrée de détection, d'un signal alternatif ou du potentiel de référence, et pour mettre alors la sortie dans un premier état,
- et d'autre part détecter la présence, sur l'entrée de détection d'un potentiel continu différent du potentiel de référence, et pour mettre alors la sortie dans un deuxième état.

Le circuit de décision sera de préférence constitué par un microcontrôleur qui peut accomplir d'autres fonctions dans l'appareil et qui, pour les besoins de l'invention, comporte un programme de test du niveau de tension présent sur l'entrée de détection, et de comparaison de cette tension avec un seuil prédéterminé, le programme comportant un test périodique et effectuant la commande de passage de la sortie dans le deuxième état si n tests successifs montrent que le niveau de tension dépasse le seuil prédéterminé, n étant un nombre choisi en fonction de la période des tests et de la période des courants alternatifs de réseaux susceptibles d'alimenter l'appareil (50 Hz et/ou 60 Hz notamment).

D'autre caractéristiques et avantages de l'invention apparaîtront à la lecture de la description détaillée qui suit et qui est faite en référence aux dessins annexés dans lesquels :
- les figures 1 à 3 déjà décrites représentent un appareil électrique selon l'art antérieur,
- la figure 4 représente la constitution d'un appareil électrique selon l'invention,
- la figure 5 représente un tableau des différentes configurations de niveau de tension possibles sur l'entrée de détection DT.

L'appareil selon l'invention, représenté à la figure 4, comporte donc deux bornes d'alimentation extérieure A et B, une entrée de contrôle E, et des sorties dépendant des fonctionnalités de l'appareil, par exemple ici trois sorties S1, S2, S3.

L'appareil peut être une minuterie dont les sorties sont reliées entre elles par un commutateur tel que dans un état de repos la sortie S1 est reliée à la sortie S2 et dans un état activé la sortie S1 est reliée à la sortie S3 ; lorsque la minuterie reçoit sur son entrée de contrôle E une tension égale à la tension d'alimentation présente sur la borne B, elle déclenche le basculement du commutateur de l'état de repos vers l'état activé ; puis, au bout d'un temps déterminé par un circuit électronique interne, la minuterie remet le commutateur dans l'état de repos. Cet exemple d'appareil et de mode de fonctionnement ne sont pas limitatifs.

Le circuit électronique qui commande le fonctionnement de l'appareil est de préférence constitué pour l'essentiel par un microcontrôleur MC, c'est-à-dire un microprocesseur pourvu d'une mémoire de travail et d'une mémoire de programmes. Ce microcontrôleur est alimenté par une basse tension continue Vdd de quelques volts, à l'aide de deux conducteurs dont l'un sera considéré comme étant à un potentiel de référence nul et l'autre à un potentiel Vdd. On considérera dans la suite que Vdd est le potentiel positif de l'alimentation continue du microcontrôleur.

Le microcontrôleur MC possède des entrées et des sorties, et notamment une entrée DT qu'on appelle entrée de détection parce qu'une des fonctions du microcontrôleur sera de scruter la tension sur cette entrée DT pour exécuter des actions (de temporisation dans le cas d'une minuterie) pour certaines configurations de signal présentes sur cette entrée. Le microcontrôleur possède par ailleurs notamment une sortie S reliée à l'entrée d'un amplificateur AMP ; la sortie de l'amplificateur commande la bobine du relais qui fait basculer le commutateur relié aux bornes S1, S2, S3. L'amplificateur est inutile si le microcontrôleur fournit une puissance suffisante sur la sortie S.

L'appareil électrique de la figure 4 comporte encore un circuit d'alimentation basse tension continue AL, qui reçoit son énergie des bornes d'alimentation extérieures A et B et qui fournit un potentiel de référence à zéro et un potentiel à Vdd sur les deux conducteurs qui alimentent en énergie le microcontrôleur MC.

Le circuit d'alimentation AL est un circuit de redressement, filtrage et régulation, mais il faut préciser que le redressement est un redressement monoalternance, ce qui a été symbolisé sur la figure 4 par une seule diode D1 en série avec le conducteur qui amène le courant de la borne d'alimentation extérieure A vers le circuit d'alimentation AL.

La borne d'alimentation B est reliée directement au conducteur au potentiel Vdd ; la régulation de tension qui produit une tension Vdd de 5 volts à partir de la tension d'alimentation entre A et B agit alors sur le conducteur au potentiel de référence et non sur le conducteur à Vdd. Cette régulation étant en général faite par un circuit à découpage, on a représenté sur la figure 4 un interrupteur en série entre la borne A et le conducteur au potentiel de référence. Cet interrupteur est commandé par un circuit de régulation de tension RG.

On notera que pour des raisons de symétrie on peut aussi envisager de faire le découpage sur l'autre conducteur, à condition de faire quelques adaptations de schéma, par exemple à condition que la minuterie soit prévue pour détecter la fermeture d'un contact entre les bornes E et A plutôt que E et B, et à condition que le diviseur résistif dont on va maintenant parler soit connecté au conducteur à Vdd et non au potentiel de référence.

La borne de contrôle E de l'appareil est reliée par une résistance R1 à l'entrée de détection DT du circuit électronique interne CE, ici l'entrée DT du microcontrôleur. Une résistance R2 est prévue entre l'entrée de détection DT et le conducteur d'alimentation au potentiel de référence à 0 voit. Cette dernière résistance peut faire partie intégrante du circuit électronique d'entrée ; par exemple elle peut faire partie intégrante du circuit intégré constituant le microcontrôleur. Si le microcontrôleur ne possède pas une telle résistance intégrée entre l'entrée DT et le conducteur de référence, il faut en mettre une à l'extérieur du microcontrôleur.

Enfin, le fonctionnement correct du circuit électronique nécessite que l'entrée de détection DT soit protégée contre l'application de tensions positives trop élevées ou de tensions négatives ; des diodes de protection sont prévues entre cette entrée et les deux conducteurs d'alimentation à Vdd et zéro. Ces diodes de protection étant de toutes façons prévues dans presque tous les circuits intégrés il ne sera en général pas nécessaire de prévoir d'en rajouter.

Le fonctionnement de l'appareil est le suivant : il est alimenté en permanence par une tension d'alimentation appliquée entre les bornes A et B. Cette tension est une tension alternative ou continue et son niveau peut être fixé (appareil fonctionnant sous une alimentation mono-tension) ou avoir plusieurs valeurs possibles (alimentation multi-tension ) : ceci dépend de la structure du circuit d'alimentation AL qui fournit la basse tension Vdd. Les circuit d'alimentation les plus simples ne supportent qu'une seule valeur de tension d'alimentation extérieure, mais les circuits plus sophistiqués et notamment les circuits fonctionnant par découpage peuvent établir à leur sortie une tension Vdd alors qu'ils sont alimentés par une tension pouvant prendre plusieurs niveaux, soit en continu (par exemple 12 volts et 24 volts) soit en alternatif (par exemple toute tension alternative entre 20 volts et 264 volts). L'invention est particulièrement intéressante dans le cas où on utilise ce type de circuit d'alimentation multi-tension.

L'appareil électrique, minuterie ou autre, étant alimenté en permanence, ce n'est pas sa mise sous tension par les bornes A et B qui déclenche son fonctionnement ou son passage dans un mode particulier de fonctionnement. Mais ce fonctionnement est déclenché par la mise sous tension de l'entrée de contrôle E, et plus précisément dans le cas du montage représenté à la figure 4 (borne B reliée à Vdd) c'est le fait de porter l'entrée de contrôle E au potentiel de la borne B qui déclenche le fonctionnement ou le mode de fonctionnement désiré.

L'utilisateur de l'appareil connecte en général un contact SW (interrupteur mécanique ou électronique, relais etc.) entre les bornes B et E.

Une charge LD peut être connectée par l'utilisateur entre les bornes E et A de l'appareil par exemple un voyant lumineux qui s'allume lorsque le contact SW se ferme.

On doit distinguer deux cas de fonctionnement de l'appareil, selon qu'une charge LD est présente ou absente. Dans les deux cas, l'appareil doit détecter la fermeture du contact SW et déclencher alors un fonctionnement déterminé (déclenchement de la minuterie).

### A - pas de charge LD entre la bornes A et E

### 1) - contact SW ouvert

Le potentiel de l'entrée de détection DT est tiré au potentiel zéro par la résistance R2. La résistance R1 est flottante.

### 2) - contact SW fermé

Le potentiel Vdd est appliqué à l'extrémité de la résistance R1. Le potentiel de l'entrée de détection DT prend une valeur Vdd.R2/(R1 + R2) définie par le pont diviseur R1, R2.

II faut choisir le rapport de division R2/(R1 + R2) de telle sorte que l'entrée de détection voie un niveau logique haut lorsque le contact SW est fermé, le niveau étant bas lorsque le contact est ouvert.

II est donc facile de détecter la fermeture du contact SW par observation de la tension sur l'entrée de détection DT. Le signal sur l'entrée DT est identique, que l'appareil travaille en tension alternative ou continue.

### B. charge LD présente entre les bornes A et E

### 1) - contact SW ouvert

### a) alimentation générale en tension continue :

Le redressement effectué par le circuit d'alimentation AL est de type monoafternance et il faut alors respecter la polarité de la tension à appliquer entre les bornes A et B : potentiel positif sur la borne B, négatif sur la borne A.

La charge LD reçoit un potentiel négatif (la valeur de tension d'alimentation générale étant supposée plus grande que Vdd et la borne B étant au potentiel Vdd). L'entrée de détection DT est tirée par la charge LD et la résistance R1 vers un potentiel négatif, mais reste en fait à zéro du fait de l'une des diodes de protection internes au microcontrôleur. Le niveau logique sur l'entrée DT est un niveau bas.

### b) alimentation pénérale en tension alternative

La charge LD et la résistance R1 tirent l'entrée DT alternativement vers un potentiel négatif (alternances de tension positives sur la borne B) et vers un potentiel positif (alternances de tension négatives). Les diodes de protection du microcontrôleur écrêtent respectivement à environ zéro volt et environ Vdd les variations de tension ainsi engendrée sur l'entrée DT par la tension alternative d'alimentation. La tension présente sur cette entrée est une succession de créneaux écrêtés à 0 et Vdd respectivement.

L'entrée DT voit donc, à la fréquence du secteur d'alimentation (50 Hz ou 60 Hz en général), une alternance de niveaux logiques bas et haut.

### 2) contact SW fermé

Le potentiel fixe Vdd est imposé sur la résistance R1 et le potentiel de l'entrée DT est cette fois encore porté à une valeur Vdd.R2/(R1 + R2) définie par le pont diviseur. Cette valeur doit être suffisante pour correspondre à un niveau logique haut.

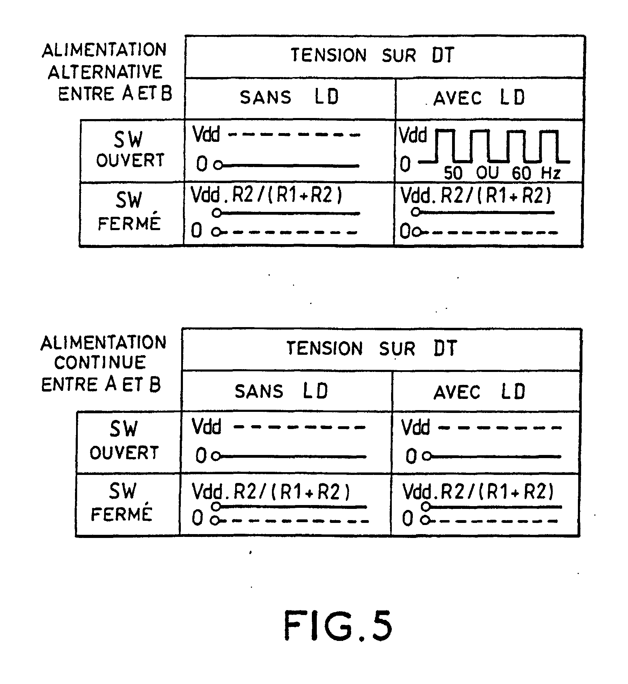

La figure 5 rappelle ces différents cas dans un tableau de synthèse.

En résumé, pour que le microcontrôleur détecte l'état du contact SW et déclenche le fonctionnement souhaité indépendamment du fait qu'une charge LD est présente ou absente, il faut qu'il puisse distinguer les deux états suivants de l'entrée :
- état 1 : le potentiel de l'entrée est à un niveau logique bas ou bien il alterne périodiquement entre un état logique bas et un état logique haut ; dans ces deux cas, le microcontrôleur reconnaît un contact SW ouvert et en tire une conséquence sur le déclenchement des fonctionnalités de l'appareil ;
- état 2 : le potentiel de l'entrée est à un niveau logique haut et il reste de manière stable à ce niveau ; dans ce cas, le microcontrôleur reconnaît un contact SW fermé et en tire une autre conséquence sur le déclenchement des fonctionnalités de l'appareil ;

Le microcontrôleur doit donc scruter en permanence le niveau de tension sur l'entrée de détection DT et déterminer si cette entrée est dans l'état 1 ou l'état 2.

On remarquera que la discrimination qu'il faut faire ne dépend pas du niveau de tension d'alimentation extérieur, ni du fait que cette alimentation soit continue ou alternative, et c'est pourquoi l'invention est particulièrement intéressante pour les appareils multi-tension.

On peut effectuer cette détermination d'état de l'entrée DT en programmant le microcontrôleur d'une manière appropriée, sachant que la tension alternative éventuellement présente dans l'état 1 a une période connue qui est celle du secteur (50 Hz ou 60 Hz) ; on peut donc demander au microcontrôleur de déterminer si la tension est au niveau logique bas au moins une fois toutes les demi-périodes, et lui demander d'en déduire que le contact SW est fermé ; ou de vérifier que le niveau logique reste haut d'une demi-période à la suivante et d'en déduire que le contact SW est fermé.

La manière préférée de déterminer l'état de l'entrée de détection DT déprendra du fonctionnement du microcontrôleur. S'il fonctionne par exemple avec une base de temps d'environ 4 millisecondes (cas d'un microcontrôleur de faible coût), on peut programmer le microcontrôleur pour qu'il enregistre successivement les niveaux de tension toutes les 4 millisecondes et qu'il garde en mémoire à chaque instant le niveau des quatre dernières valeurs logiques détectées. Si les quatre valeurs sont hautes c'est que le contact a été fermé ; sinon il est ouvert. On peut bien sûr prévoir que l'appareil électrique n'est déclenché qu'après une nouvelle série de quatre mesures confirmant la succession de quatre niveaux logiques hauts.

Ce nombre de quatre mesures successives effectuées toutes les 4 millisecondes permet une détection aussi bien pour une fréquence de secteur de 50 Hz que pour une fréquence de 60 Hz. En effet, quatre mesures séparées par 4 millisecondes s'étendent sur 12 millisecondes et correspondent donc à deux ou trois mesures dans l'une des alternances et au moins une mesure dans l'alternance suivante du secteur, la durée d'une alternance positive ou négative étant de 10 millisecondes pour le secteur à 50 Hz et 8,33 millisecondes pour 60 Hz.

On pourra bien entendu faire le même raisonnement pour d'autres valeurs de base de temps du microcontrôleur et déterminer le nombre de niveaux successifs qu'il faut vérifier pour aboutir à la détermination désirée, étant entendu que la période de base de temps ne doit pas être égale à la période du secteur ni un multiple de cette période.

Le choix des résistances R1 et R2 doit être fait en tenant compte de ce qu'il est en général souhaitable de limiter le courant de fuite dans la charge LD lorsque le contact SW est ouvert. Des résistances de plusieurs centaines de kilohms pourront être utilisées. Le rapport R2/(R1+R2) soit être suffisamment élevé pour que la valeur de tension Vd.R2/(R1+R2) corresponde à un niveau logique haut.

Par ailleurs la résistance R1 seule doit supporter la quasi totalité de la tension du secteur lorsque le contact SW est ouvert, et il faut en tenir compte dans son dimensionnement.

## Revendications

1. Appareil électrique ayant deux bornes d'alimentation extérieure (A, B) et comportant un circuit électrique accomplissant une fonction déterminée sous la commande de fermeture ou d'ouverture d'un contact électrique (SW) pouvant être relié entre une première des bornes d'alimentation extérieure (B) et une entrée de contrôle (E) de l'appareil, l'appareil comportant encore :
- un circuit électronique de décision (CE, MC) alimenté par deux conducteurs dont l'un est à un potentiel de référence et l'autre est une basse tension continue Vdd, le circuit de décision ayant une entrée de détection de signal (DT) et une sortie (S) pouvant prendre deux états selon la nature du signal présent sur l'entrée de détection, cette sortie commandant ladite fonction déterminée du circuit électrique,
- un circuit d'alimentation basse-tension continue (AL) lui-même alimenté par les deux bornes d'alimentation extérieure (A, B), ce circuit effectuant un redressement monoalternance et ayant pour sorties les conducteurs au potentiel de référence et à la tension Vdd,
l'appareil étant **caractérisé en ce que** :
a) le conducteur à la tension Vdd est relié à une borne d'alimentation extérieure (B),
b) l'entrée de contrôle (E) de l'appareil est reliée par une première résistance (R1) à l'entrée de détection (DT) du circuit de décision,
c) l'entrée de détection est reliée par une deuxième résistance (R2) au conducteur au potentiel de référence,
d) le circuit de décision comporte des moyens électroniques pour,
- d'une part détecter la présence, sur l'entrée de détection, d'un signal alternatif ou du potentiel de référence, et pour mettre alors la sortie (S) dans un premier état,
- et d'autre part détecter la présence, sur l'entrée de détection d'un potentiel continu différent du potentiel de référence, et pour mettre alors la sortie (S) dans un deuxième état.

2. Appareil électrique selon la revendication 1, **caractérisé en ce que** le circuit de décision est constitué par un microcontrôleur (MC) comportant un programme de test du niveau de tension présent sur l'entrée de détection (DT), et de comparaison de cette tension avec un seuil prédéterminé, le programme comportant un test périodique et effectuant la commande de passage de la sortie dans le deuxième état si n tests successifs montrent que le niveau de tension dépasse le seuil prédéterminé, n étant un nombre choisi en fonction de la période des tests et de la période des courants alternatifs de réseau susceptibles d'alimenter l'appareil (50 Hz et/ou 60 Hz notamment).

## Patentansprüche

1. Elektrisches Gerät, das zwei Anschlüsse (A, B) für externe Versorgung besitzt und eine elektrische Schaltung umfaßt, die unter der Steuerung des Schließens oder Öffnens eines elektrischen Kontakts (SW), der zwischen einen ersten (B) der Anschlüsse für externe Versorgung und einen Steuereingang (E) des Geräts geschaltet werden kann, eine bestimmte Funktion ausführt, wobei das Gerät außerdem umfaßt:
- eine elektronische Entscheidungsschaltung (CE, MC), die durch zwei Leiter versorgt wird, wovon einer auf einem Referenzpotential liegt und der andere auf einer niedrigen Gleichspannung Vdd liegt, wobei die Entscheidungsschaltung einen Signalerfassungseingang (DT) und einen Ausgang (S) besitzt, der je nach Art des am Erfassungseingang anliegenden Signals zwei Zustände annehmen kann und die bestimmte Funktion der elektrischen Schaltung steuert,
- eine Schaltung (AL) für die Versorgung mit einer niedrigen Gleichspannung, die ihrerseits von den beiden Anschlüssen (A, B) für externe Versorgung versorgt wird, eine Einzelhalbperioden-Gleichrichtung bewerkstelligt und als Ausgänge die Leiter auf dem Referenzpotential bzw. auf der Spannung Vdd hat,
wobei das Gerät **dadurch gekennzeichnet ist, daß**:
a) der Leiter auf der Spannung Vdd mit einem Anschluß (B) für externe Versorgung verbunden ist,
b) der Steuereingang (E) des Geräts über einen ersten Widerstand (R1) mit dem Erfassungseingang (DT) der Entscheidungsschaltung verbunden ist,
c) der Erfassungseingang über einen zweiten Widerstand (R2) mit dem Leiter auf dem Referenzpotential verbunden ist,
d) die Entscheidungsschaltung elektronische Mittel umfaßt, um
- einerseits das Anliegen eines Wechselsignals oder des Referenzpotentials am Erfassungseingang zu erfassen und dann den Ausgang (S) in einen ersten Zustand zu versetzen,
- und andererseits das Anliegen eines von dem Referenzpotential verschiedenen Gleichspannungspotentials am Erfassungseingang zu erfassen und dann den Ausgang (S) in einen zweiten Zustand zu versetzen.

2. Elektrisches Gerät nach Anspruch 1, **dadurch gekennzeichnet, daß** die Entscheidungsschaltung aus einem Mikrocontroller (MC) gebildet ist, der ein Programm zum Prüfen des Spannungspegels, der am Erfassungseingang (DT) anliegt, und zum Vergleichen dieser Spannung mit einem vorgegebenen Schwellenwert enthält, wobei das Programm eine periodische Prüfung enthält und die Steuerung des Übergangs des Ausgangs in den zweiten Zustand befiehlt, wenn n aufeinanderfolgende Prüfungen zeigen, daß der Spannungspegel den vorgegebenen Schwellenwert übersteigt, wobei n eine Zahl ist, die in Abhängigkeit von der Periode der Prüfungen und von der Periode der Netzwechselströme, die das Gerät versorgen können (insbesondere 50 Hz und/oder 60 Hz), gewählt ist.

## Claims

1. Electrical apparatus having two external power-supply terminals (A, B) and including an electrical circuit accomplishing a defined function under the control of the closing or opening of an electrical contact (SW) capable of being linked between a first one of the external power-supply terminals (B) and a control input (E) of the apparatus, the apparatus further including:
- an electronic decision circuit (CE, MC) supplied by two conductors, one of which is at reference potential and the other of which is at a low DC voltage Vdd, the decision circuit having a signal-detection input (DT) and an output (S) which is capable of taking up two states depending on the nature of the signal present on the detection input, this output controlling the said defined function of the electrical circuit,
- a low-voltage DC power-supply circuit (AL), itself supplied via the two external power-supply terminals (A, B), this circuit carrying out half-wave rectification and having the conductors at the reference potential and at the voltage Vdd as its outputs,
the apparatus being **characterized in that**:
a) the conductor at the voltage Vdd is linked to an external power-supply terminal (B),
b) the control input (E) of the apparatus is linked by a first resistor (R1) to the detection input (DT) of the decision circuit,
c) the detection input is linked by a second resistor (R2) to the conductor at the reference potential,
d) the decision circuit includes electronic means for,
- on the one hand, detecting the presence on the detection input of an alternating signal or of the reference potential, and then for putting the output (S) into a first state,
- and, on the other hand, detecting the presence, on the detection input, of a DC potential other than the reference potential, and then for putting the output (S) into a second state.

2. Electrical apparatus according to Claim 1, **characterized in that** the decision circuit consists of a microcontroller (MC) including a program for testing the voltage level present on the detection input (DT), and for comparing this voltage with a predetermined threshold, the program including a periodic test and causing the output to change to the second state if n successive tests show that the voltage level exceeds the predetermined threshold, n being a number chosen as a function of the period of the tests and of the period of the mains alternating currents likely to supply the apparatus (50 Hz and/or 60 Hz especially).
